# FASCICULE DE BREVET EUROPEEN

(11) **EP 1 215 107 B1**
(45) Date de publication et mention de la délivrance du brevet: **28.07.2004**
(21) Numéro de dépôt: 01403155.3
(22) Date de dépôt: 06.12.2001
(51) Int. Cl.: B62D 33/027, B62D 33/08, B60P 3/40

(54) **Véhicule automobile à benne extensible**
Kraftfahrzeug mit verlängbaren Ladepritschen
Motor car with extensible loading platform

(30) Priorité: 18.12.2000 FR 0016509
(43) Date de publication de la demande: 19.06.2002
(73) Titulaire: Peugeot Citroen Automobiles SA, 92200 Neuilly sur Seine (FR)
(72) Inventeur: Bertrand Belanger, Pascal, 92310 Sevres (FR)
(74) Mandataire: Bouget, Lucien

(56) Documents cités:
- DE-C- 116 605
- US-A- 2 780 475
- US-A- 5 934 727
- US-A- 6 019 410

## Description

L'invention est relative à un véhicule automobile ayant une benne ouverte vers le haut située à l'arrière d'une cabine contenant le poste de conduite du véhicule.

On connaît des véhicules automobiles appelés pick-up qui comportent, à l'arrière d'une cabine constituée par la partie antérieure d'un habitacle de véhicule automobile renfermant le poste de conduite, une benne ouverte vers le haut de forme générale parallélépipédique. La benne ouverte du pick-up comporte un plancher, deux parois latérales dans la direction longitudinale du véhicule et une paroi d'extrémité arrière ouvrante, dans une direction transversale, située à l'opposé de la cabine. De tels véhicules présentent des avantages en ce qui concerne leur capacité de chargement, par rapport à une berline classique ou même par rapport à un break, puisque le niveau de chargement de la benne est pratiquement illimité du fait de l'absence d'un toit recouvrant la benne. Toutefois, les possibilités de chargement en longueur du véhicule sont limitées par la paroi arrière ouvrante de la benne. Lorsqu'on transporte des objets longs en roulant avec la paroi arrière de la benne ouverte ou abaissée, cette paroi arrière peut constituer dans sa position abaissée un plancher supplémentaire de la benne ; cependant les objets sont malgré tout mal protégés.

On connaît également des véhicules automobiles (voir US-A-6 019 410), du type berline ou break qui comportent une partie de carrosserie arrière montée pivotante qui est susceptible d'être basculée vers l'arrière pour constituer un prolongement du coffre ou de la partie arrière du plancher de chargement du véhicule. Le prolongement du US-A-6 019 410 est formé par le panneau de la porte arrière et est supporté dans le plan horizontal seulement par l'articulation de cette porte. Ainsi, la stabilité verticale de ce prolongement est reduite.

Le but de l'invention est de fournir un prolongement plus stable. L'invention port sur un véhicule automobile ayant une benne ouverte vers le haut et de forme générale parallélépipédique située à l'arrière d'une cabine contenant le poste de conduite du véhicule et comportant un plancher, deux parois latérales dans la direction longitudinale du véhicule et une paroi d'extrémité arrière ouvrante, dans une direction transversale située à l'opposé de la cabine, ce véhicule automobile présentant une benne extensible qui assure une protection efficace d'objets transportés, dans sa position d'extension, par des parois sensiblement verticales entourant le plancher de la benne sur tous ses côtés.

Dans ce but :
- le plancher comporte un élément médian de plancher fixé à demeure sur un châssis horizontal du véhicule et dans une disposition transversale, ayant un bord antérieur transversal à une certaine distance de la cabine dans la direction longitudinale et un élément d'extrémité comportant une partie pleine ayant la largeur du plancher de la benne et une dimension dans la direction longitudinale sensiblement égale à la distance entre la cabine et le bord antérieur de l'élément médian et deux bras parallèles entre eux dans le prolongement longitudinal de deux bords latéraux de la partie pleine, articulés à leurs extrémités sur chacun des deux côtés latéraux de l'élément médian de part et d'autre de l'élément médian, entre une position rabattue à l'horizontale sur le châssis du véhicule correspondant à une configuration non-étendue de la benne, dans laquelle la partie pleine de l'élément d'extrémité du plancher est intercalée entre la cabine et l'élément médian et une position rabattue vers l'arrière, dans laquelle les bras sont en appui sur le châssis de part et d'autre de l'élément médian et la partie pleine de l'élément d'extrémité, disposée dans le prolongement longitudinal de l'élément médian, vers l'arrière,
- la paroi d'extrémité arrière ouvrante est constituée par deux portes montées pivotantes chacune autour d'un premier axe vertical sur le châssis, immédiatement à l'arrière de l'élément médian de plancher et comportant chacune un premier et un second panneaux, le premier panneau étant articulé sur le châssis autour du premier axe vertical et le second panneau étant articulé sur le premier panneau autour d'un second axe vertical suivant un second bord du premier panneau parallèle et opposé à un premier bord suivant lequel se trouve le premier axe, de manière que les portes puissent être placées dans une première position pour constituer la paroi transversale d'extrémité arrière de la benne dans sa configuration non étendue, les premiers et seconds panneaux des portes étant rabattus l'un contre l'autre et les portes étant placées dans une disposition transversale à l'arrière de l'élément médian du plancher et dans une seconde position correspondant à une position d'extension de la benne, les premiers panneaux étant disposés longitudinalement dans l'alignement de parois latérales fixes de la benne et les seconds panneaux des portes étant placés transversalement pour fermer la benne à l'arrière de l'élément d'extrémité du plancher rabattu vers l'arrière, et
- le véhicule comporte de plus un élément complémentaire de plancher ayant une largeur sensiblement égale à la dimension transversale de la benne et une dimension longitudinale sensiblement égale à la distance entre l'arrière de la cabine et le bord antérieur de l'élément médian de plancher, monté pivotant suivant son bord transversal avant sur le châssis du véhicule, immédiatement à l'arrière de la cabine, entre une position relevée contre l'arrière de la cabine dans la première position non étendue de la benne et une position rabattue sur le châssis entre la cabine et l'élément médian du plancher, dans la seconde position étendue de la benne.

Afin de bien faire comprendre l'invention, on va décrire, à titre d'exemple en se référant aux figures jointes en annexes, un mode de réalisation d'un véhicule automobile à benne extensible suivant l'invention.
Les figures 1, 2 et 3 sont des vues en perspective du véhicule à benne extensible suivant l'invention dans trois positions fonctionnelles différentes.
La figure 1 est relative à la position normale non-étendue de la benne.
La figure 2 est relative à une position intermédiaire au cours du déplacement des éléments de la benne entre la position normale et la position étendue.
La figure 3 est relative à la position étendue de la benne.
La figure 4 est une vue latérale et en coupe partielle du véhicule et des éléments extensibles de la benne.
La figure 5 est une vue en perspective d'un moyen de verrouillage d'un élément de plancher dans une position de verrouillage.
La figure 6 est une vue en perspective éclatée de la benne montrant des moyens auxiliaires de rangement et de passage d'objets chargés dans la benne.

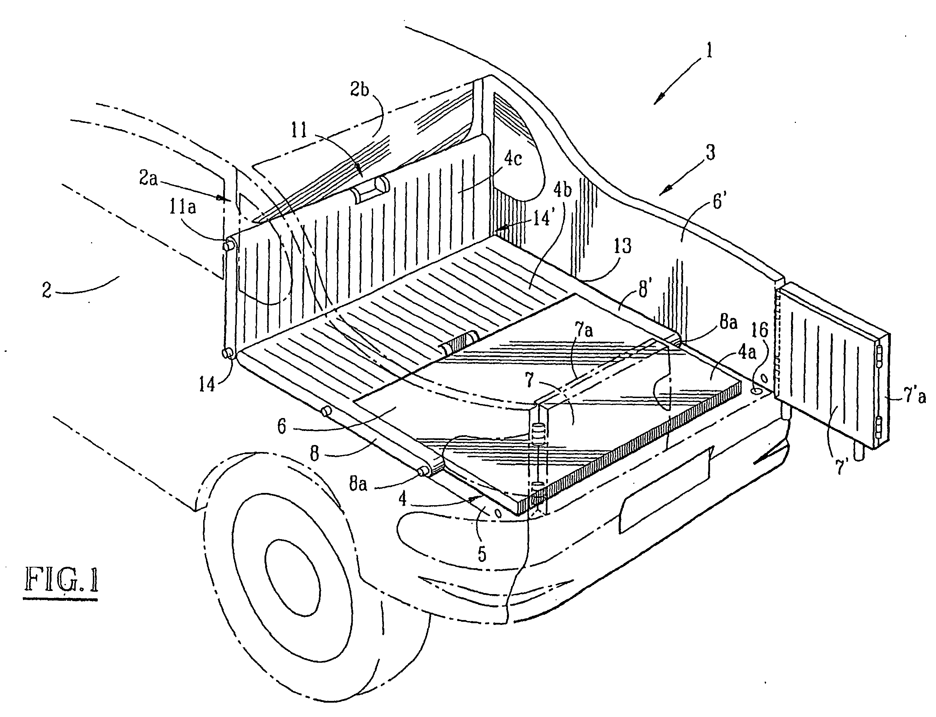

Sur les figures 1, 2 et 3, ont voit un véhicule automobile suivant l'invention désigné de manière générale par le repère 1.

Le véhicule automobile comporte une cabine 2 qui peut être constituée par la partie avant d'un habitacle d'un véhicule automobile de type classique. Le poste de conduite du véhicule est disposé à l'intérieur de la cabine 2 qui est délimitée vers l'arrière du véhicule, par une paroi verticale 2a comportant dans sa partie supérieure une vitre 2b.

Le véhicule 1 qui est du type pick-up comporte à l'arrière de l'habitacle 2, une benne 3 de forme générale parallélépipédique comportant un plancher 4 reposant sur les longerons d'un châssis 5 du véhicule automobile, des parois latérales fixes 6 et 6'de direction longitudinale et une paroi ouvrante de direction transversale disposée à l'arrière du plancher 4 et constituée par des portes 7, 7' pouvant se déplacer entre une position d'ouverture et une position de fermeture dans laquelle les portes 7 et 7' sont disposées dans une direction transversale, au-dessus de la partie arrière du châssis 5 du véhicule automobile 1.

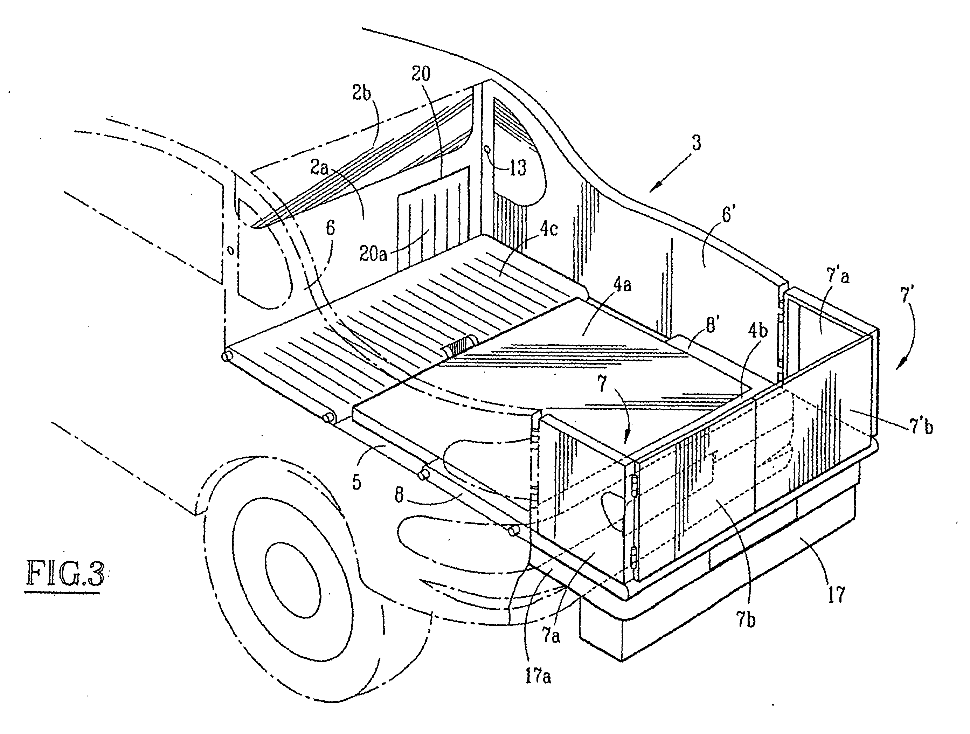

Sur la figure 1, le véhicule automobile a été représenté avec la benne 3 dans sa configuration normale non-étendue et sur la figure 3, le véhicule a été représenté avec la benne 3 dans sa configuration étendue. Dans cette configuration, un premier panneau 7a, 7'a des portes 7 et ou 7' constitue un prolongement des parois latérales fixes 6 et 6' du véhicule automobile et un second panneau 7b ou 7'b des portes 7 ou 7', une cloison transversale de fermeture de la partie arrière de la benne 3.

Le plancher 4 du véhicule automobile comporte un élément médian fixe 4a, un élément d'extrémité mobile 4b et un élément complémentaire 4c qui n'est utilisé comme élément de plancher que dans la configuration du véhicule à benne étendue, comme représenté sur la figure 3.

L'élément fixe médian de plancher 4a s'étend dans la direction transversale sur une largeur légèrement inférieure à la largeur du châssis 5 dans la direction transversale.

L'élément 4a est désigné comme élément médian du plancher, du fait qu'il est intercalé entre l'élément d'extrémité 4b et l'élément complémentaire de plancher 4c dans la position étendue de la benne représentée sur la figure 3.

L'élément d'extrémité 4b du plancher comporte une partie pleine ou panneau de forme sensiblement rectangulaire dont la largeur dans la direction transversale est sensiblement égale à la largeur du châssis 5 et dont la longueur dans la direction longitudinale du véhicule automobile est sensiblement égale à la distance entre la cabine 2 et le bord de direction transversale de l'élément médian 4a situé à l'avant de l'élément médian.

L'élément d'extrémité 4b du plancher 4 comporte deux bras 8 et 8' dans le prolongement longitudinal de deux bords latéraux de la partie pleine de l'élément de l'extrémité 4b du plancher qui sont articulés, à leurs extrémités, par l'intermédiaire d'axes horizontaux 8a et 8'a qui sont alignés dans la direction transversale du châssis 5 et du plancher 4, sur les côtés latéraux de l'élément médian 4a du plancher disposés légèrement en retrait par rapport au bord du châssis 5.

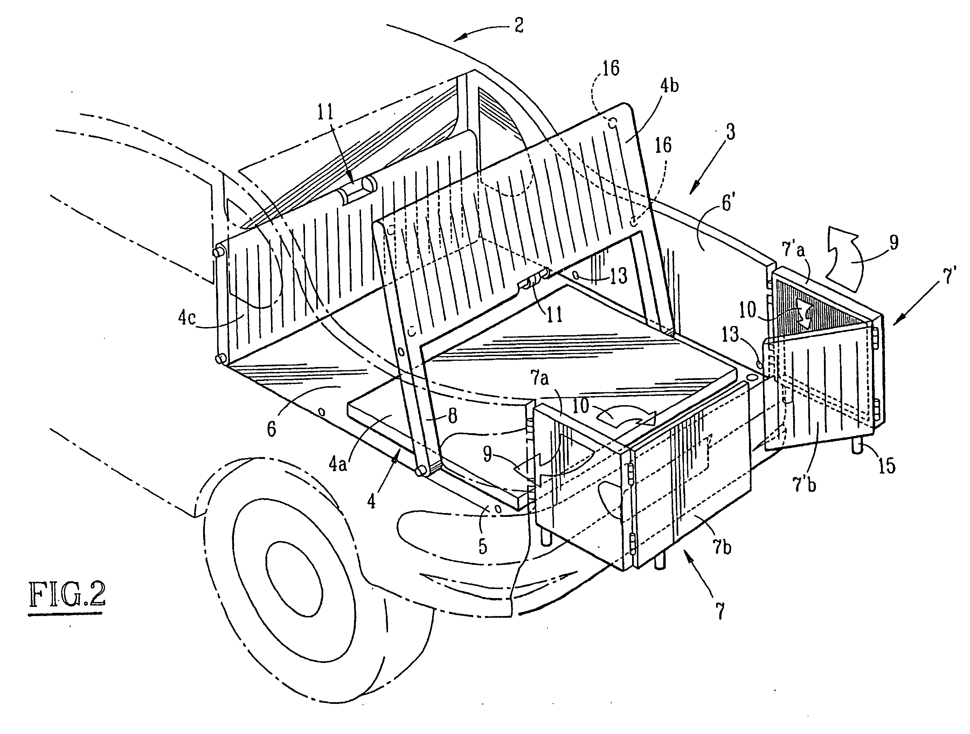

Comme il est visible sur la figure 1, l'élément d'extrémité 4b du plancher 4 est rabattu vers l'avant du véhicule automobile et repose sur le châssis 5 du véhicule automobile, dans une première position correspondant à la configuration normale de la benne. Dans cette position, la partie pleine de l'élément d'extrémité 4b du plancher est intercalée entre le bord antérieur de l'élément médian 4a et l'élément complémentaire 4c du plancher 4 rabattu dans une position verticale contre la paroi arrière 2a de la cabine 2 du véhicule. Comme il est visible sur les figures 2 et 3, le panneau d'extrémité 4b dont les bras 8 et 8' sont articulés à leurs extrémités par l'intermédiaire des axes 8a et 8'a sur l'élément médian 4a peut être déplacé entre sa première position correspondant à la configuration normale de la benne, et une seconde position représentée sur la figure 3 correspondant à la configuration étendue de la benne 3 du véhicule automobile.

Dans cette position, l'élément d'extrémité 4b du plancher 4 repose par l'intermédiaire des bras 8 et 8' sur les bords du châssis 5 du véhicule automobile, de part et d'autre de l'élément médian 4a du plancher 4. La partie pleine de l'élément d'extrémité 4b du plancher s'étendant sur toute la largeur du châssis 5 et de la benne 3 est soutenue en porte à faux par rapport à l'extrémité arrière du châssis 5, par l'intermédiaire des bras 8 et 8'.

Dans la position étendue de la benne représentée sur la figure 3, l'élément complémentaire de plancher 4c dont les dimensions sont sensiblement égales aux dimensions de la partie pleine de l'élément d'extrémité 4b du plancher est intercalé entre la surface arrière 2a de la cabine 2 et le bord antérieur de l'élément médian 4a du plancher.

Les portes 7 et 7' constituant la paroi transversale arrière de la benne comportent un premier panneau 7a ou 7'a qui est articulé autour d'un axe vertical sur une partie d'extrémité longitudinale d'une paroi latérale fixe respective de la benne 3 du véhicule par l'intermédiaire de charnières respectivement solidaires du premier panneau de la porte et de la partie d'extrémité de la paroi latérale.

Chacune des portes 7 et 7' comporte, comme il est visible sur la figure 2, un second panneau 7b (ou 7'b) monté articulé autour d'un axe vertical sur un bord vertical du premier panneau 7a opposé au bord monté articulé sur la partie d'extrémité de la paroi latérale 6 (ou 6').

Les premiers panneaux 7a et 7'a des portes 7, 7' comportent un cadre périphérique de manière à constituer un logement parallélépipédique du second panneau correspondant 7b (ou 7'b) dans sa position repliée vers le premier panneau, comme représenté sur la figure 1.

Dans cette configuration, les portes 7 et 7' peuvent être déplacées par pivotement dans leur ensemble entre la position ouverte représentée sur la figure 1 et une position de fermeture de l'extrémité arrière de la benne 3, les portes 7 et 7' étant alors alignées au-dessus du bord arrière transversal du châssis 5 du véhicule automobile.

Lorsqu'on passe à la position étendue de la benne comme représentée sur les figures 2 et 3, on réalise l'ouverture des portes 7 et 7' comme représenté par les flèches 9 qui sont ensuite dépliées par pivotement du second panneau 7b (ou 7'b) pour l'éloigner du premier panneau 7a (ou 7'a) comme représenté par les flèches 10.

Dans la configuration étendue de la benne représentée sur la figure 3, les premiers panneaux 7a et 7'a des portes 7 et 7' se trouvent dans l'alignement longitudinal des parois fixes 6 et 6' de la benne et prolongent ces parois vers l'arrière, jusqu'à l'extrémité arrière de l'élément d'extrémité 4b du plancher basculé vers l'arrière. Les panneaux 7a et 7'a des portes 7 et 7' sont alors disposés au-dessus des bords latéraux de l'élément d'extrémité 4b du plancher 4.

Les seconds panneaux 7b et 7'b des portes 7 et 7' sont déplacés par pivotement à 90° par rapport aux premiers panneaux 7a et 7'a de manière à se trouver dans la direction transversale du véhicule automobile et à constituer la paroi d'extrémité arrière de la benne 3.

Les éléments du plancher et les panneaux des portes arrières de la benne comportent des moyens de verrouillage permettant de les immobiliser dans leurs positions d'utilisation.

De manière générale, les éléments de plancher mobiles 4b et 4c comportent des éléments de verrouillage qui sont disposés dans l'épaisseur de l'élément de plancher constitué sous la forme d'un panneau.

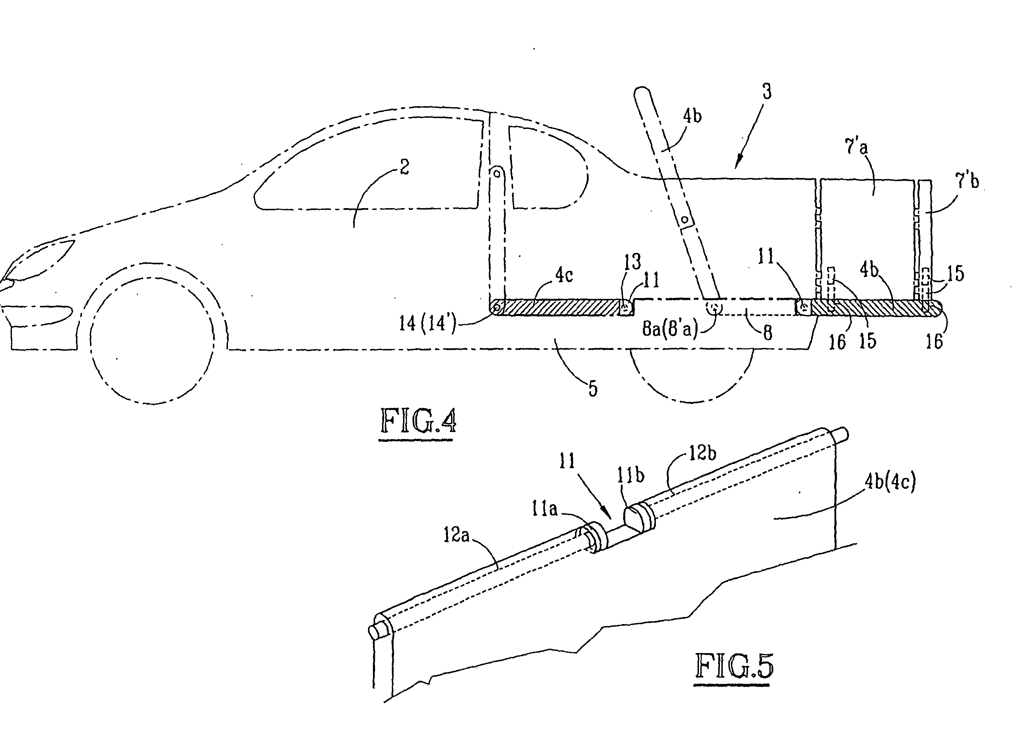

Des moyens de verrouillage d'un élément de plancher 4b et 4c ont été représentés sur la figure 5.

Le moyen de verrouillage désigné dans son ensemble par le repère 11 comporte deux loquets 11a, 11b dont la tige est engagée de manière coulissante dans un palier respectif 12a, 12b réalisé dans une partie de bord du panneau constituant l'élément de plancher 4 b ou 4c.

De cette manière, les loquets des verrous sont accessibles dans toutes les positions du panneau, que celui-ci soit vertical ou rabattu dans une position horizontale, sur une face ou sur l'autre.

Un verrou 11 est disposé suivant le bord arrière de la partie pleine ou panneau de l'élément d'extrémité 4b du plancher pour réaliser le verrouillage de l'élément 4b par introduction des loquets correspondants 11a et 11b dans des trous respectifs 13 prévus dans les parois 6 et 6' de la benne. De même, un verrou 11 est disposé suivant le bord arrière ou supérieur du panneau 4c, de manière à verrouiller le panneau 4c, par introduction des loquets 11a et 11b du verrou dans des ouvertures 13 des parois latérales 6 et 6' de la benne. Lorsque l'élément complémentaire de plancher 4c est en position verticale, les loquets des verrous 11 sont engagés dans des ouvertures 13 à la partie supérieure des parois 6 et 6' (position normale non étendue de la benne 3) et lorsque l'élément complémentaire de plancher 4c est en position horizontale, les loquets du verrou 11 sont engagés dans des ouvertures 13 situées à la partie inférieure des parois fixes longitudinales 6 et 6' de la benne (position étendue de la benne représentée sur la figure 3. Les ouvertures de verrouillage de l'élément 4b en position rabattue vers l'avant sont les mêmes que les ouvertures 13 de verrouillage de l'élément complémentaire de plancher 4c en position horizontale c'est à dire rabattue vers l'arrière. Lors du passage de la benne de sa configuration normale à sa configuration étendue, l'élément complémentaire de plancher 4c se substitue à la partie pleine ou panneau de l'élément d'extrémité 4b entre la cabine et l'élément médian fixe de plancher 4a. Pour cela, on fait pivoter l'élément d'extrémité 4b du plancher autour de ses axes 8a et 8'a pour le rabattre vers l'arrière et on fait pivoter autour des axes d'articulation 14 et 14' situés suivant son bord inférieur ou avant, l'élément complémentaire de plancher 4c. Bien entendu, pour faire pivoter l'élément d'extrémité 4b du plancher et l'élément complémentaire 4c, on réalise préalablement le déverrouillage des loquets 11a et 11b des verrous 11 correspondants, engagés dans les ouvertures 13 des parois fixes longitudinales de la benne. Dans sa position rabattue vers l'arrière, l'élément d'extrémité 4b du plancher est verrouillé par l'intermédiaire de son verrou 11 dont les loquets sont introduits dans des ouvertures 13 situées à l'arrière et à la partie inférieure des parois longitudinales 6 et 6' de la benne.

Sur la figure 4, on a représenté les axes d'articulation 14, 14' et 8a, 8'a et les éléments de plancher 4b et 4c ainsi que les éléments de verrouillage 11 et les ouvertures 13 permettant le verrouillage des éléments dans la configuration normale non-étendue et dans la configuration étendue de la benne 3.

Les portes 7 et 7' montées articulées aux extrémités des parois fixes longitudinales 6 et 6' de la benne comportent également des moyens de verrouillage sous la forme de doigts 15 qui peuvent être soulevés en position de déverrouillage et rappelés en position de verrouillage par des ressorts, les doigts pénétrant alors dans des ouvertures de verrouillage 16 prévues dans l'élément d'extrémité 4b du plancher et dans l'extrémité arrière du châssis 5, les portes 7 et 7' pouvant ainsi être verrouillées dans leur position correspondant soit à la configuration normale de la benne non-étendue, soit à la configuration étendue de la benne.

Des doigts de verrouillage 15 sont prévus à la fois sur le côté inférieur du premier panneau 7a (ou 7'a) de la porte 7 ou 7' et sur la partie inférieure du second panneau 7b (ou 7'b) de la porte 7 (ou 7').

Comme il est visible sur la figure 4, les doigts 15 du premier et du second panneau de chacune des portes 7 et 7' sont engagées dans des ouvertures 16 de l'élément d'extrémité 4b dans la configuration étendue de la benne. Dans la configuration normale non-étendue de la benne, le second panneau 7b (ou 7'b) est verrouillé par les doigts de verrouillage 15 sur le premier panneau le doigt 15 traversant une ouverture 16 du côté inférieur du premier panneau, d'autre part, les portes 7 et 7' sont verrouillées sur le bord transversal extérieur du châssis 5 du véhicule, à l'arrière de l'élément médian 4a du plancher, par introduction des doigts 15 dans des ouvertures 16 du châssis du véhicule automobile.

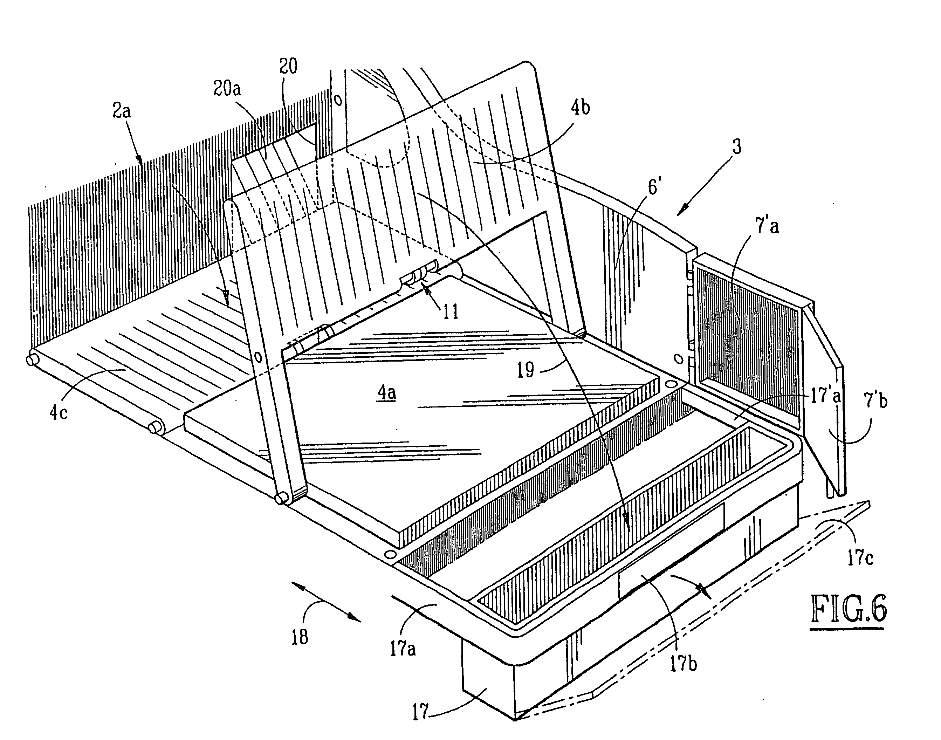

Comme il est visible en particulier sur la figure 6, un coffre 17 peut être disposé dans la partie arrière de la benne, le coffre 17 étant solidaire de bras 17 a et 17'a qui sont engagés de manière coulissante dans la direction longitudinale à l'intérieur des longerons du châssis 5 du véhicule automobile, en-dessous de l'élément médian fixe 4a du plancher ; le coffre 17 peut être déplacé vers l'avant ou vers l'arrière, comme représenté par la double flèche 18, à la manière d'un tiroir, entre une position repliée vers l'avant du véhicule automobile, le coffre étant alors sous la partie arrière du châssis et de l'élément médian fixe 4a du plancher, cette position correspondant à la configuration normale non-étendue de la benne et une position extraite comme représentée sur les figures 3 et 6, dans laquelle le coffre 17 se trouve à une certaine distance à l'arrière de la partie d'extrémité arrière du châssis 5 et de l'élément médian fixe 4a du plancher cette position correspondant à la configuration étendue de la benne 3 du véhicule automobile.

Lorsque l'élément d'extrémité 4b du plancher est rabattu vers l'arrière comme représenté par la flèche 19 sur la figure 6, la partie pleine ou panneau de l'élément d'extrémité 4b vient recouvrir la partie supérieure du coffre 17 et les bras 17a et 17'a, comme il est visible sur la figure 3. Le coffre 17 et ses bras 17a et 17'a servent alors d'appui au panneau d'extrémité 4b.

Pour accéder à l'intérieur du coffre 17b pour le chargement ou le déchargement d'objets, on peut soulever l'élément d'extrémité 4b du plancher après avoir déverrouillé les loquets du verrou 11 de l'élément 4b.

On peut également accéder à l'intérieur du coffre 17, par l'intermédiaire d'une ouverture 17b dans la partie arrière du coffre, l'ouverture 17b pouvant être recouverte par une trappe pivotante 17c qui vient se verrouiller en position haute contre la face arrière du coffre 17. La trappe 17c peut porter de manière avantageuse, sur sa face externe, des moyens de signalisation électrique arrière et/ou la plaque minéralogique du véhicule automobile.

Comme il est visible sur les figures 3 et 6, la face arrière 2a de la cabine du véhicule automobile comporte une ouverture 20 qui peut être fermée par une trappe 20a articulée suivant son bord inférieur de manière à pouvoir être rabattue à l'intérieur de l'habitacle du véhicule automobile jusque dans une position horizontale.

L'ouverture 20, lorsque la trappe 20a est ouverte et rabattue en position horizontale dans l'habitacle du véhicule automobile permet d'engager des objets de grande longueur transportés à l'intérieur de la benne 3 du véhicule, jusqu'à venir faire reposer une partie de ces éléments de grande longueur sur la trappe 20a, à l'intérieur de l'habitacle, ou même dans une position située à l'avant de la trappe 20a dans un emplacement adjacent par rapport au poste de conduite. De cette manière, on peut transporter dans le véhicule automobile, à l'intérieur de la benne et de l'habitacle, des objets ayant une longueur peu inférieure à la longueur du véhicule avec sa benne dans la position étendue. Ces objets peuvent être transportés sans qu'il soit nécessaire de laisser ouvertes les portes constituant la paroi arrière de la benne 3 dans sa configuration étendue.

Le passage de la configuration normale de la benne représentée sur la figure 1 à la configuration étendue représentée sur la figure 3 est obtenue par ouverture des portes 7 et 7', fixation des premiers panneaux des portes dans l'alignement des parois latérales fixes 6 et 6' du véhicule automobile, ouverture des seconds panneaux 7b et 7'b par rapport aux premiers panneaux 7a et 7'a, rabattement vers l'arrière de l'élément d'extrémité 4b du plancher, après avoir éventuellement tiré le tiroir 17 vers l'arrière de manière à faire coulisser les bras 17a et 17'a jusqu'à leur position extrême arrière dans le châssis, puis rabattement de l'élément complémentaire de plancher 4c entre le bord avant de l'élément médian fixe 4a du plancher 4 et la paroi arrière 2a de l'habitacle 2. On peut ensuite fermer l'arrière de la benne par rabattement des seconds panneaux 7b et 7'b des portes 7 et 7'. La benne du véhicule automobile se trouve alors dans la configuration représentée sur la figure 3.

Un avantage du véhicule automobile à benne extensible suivant l'invention est de fournir une capacité de chargement supplémentaire notable, l'allongement de la benne représentant par exemple la demi largeur de la benne, soit 800 millimètres. Les éléments constitutifs des moyens d'extension de la benne sont de construction simple et rustique ce qui permet d'obtenir une bonne tenue au cours du temps de ces éléments et une grande simplicité de fonctionnement du dispositif d'extension. Le maintien en porte à faux de l'élément d'extrémité 4b du plancher à l'aide de bras permet une construction très robuste. En outre, le prix de revient de la benne extensible selon l'invention est très modéré. Il est possible de prévoir un espace de rangement supplémentaire sous la forme d'un coffre disposé sous l'élément de plancher dans la configuration étendue de la benne. Il est également possible de transporter dans de très bonne condition de sécurité des objets longs dont la longueur n'est que peu inférieure à la longueur totale du véhicule automobile.

Enfin, l'invention peut s'appliquer à des versions pick-up d'un grand nombre de véhicule automobile de type classique.

## Revendications

1. Véhicule automobile ayant une benne (3) ouverte vers le haut et de forme générale parallélépipédique située à l'arrière d'une cabine (2) contenant le poste de conduite du véhicule et comportant un plancher (4), deux parois latérales dans la direction longitudinale du véhicule et une paroi d'extrémité arrière ouvrante, dans une direction transversale située à l'opposé de la cabine (2), **caractérisé par le fait que** :
- le plancher comporte un élément médian de plancher (4a) fixé à demeure sur un châssis horizontal (5) du véhicule et dans une disposition transversale, ayant un bord antérieur transversal à une certaine distance de la cabine (2) dans la direction longitudinale et un élément d'extrémité (4b) comportant une partie pleine ayant la largeur du plancher de la benne et une dimension dans la direction longitudinale sensiblement égale à la distance entre la cabine (2) et le bord antérieur de l'élément médian (4a) et deux bras (8, 8') parallèles entre eux dans le prolongement longitudinal de deux bords latéraux de la partie pleine, articulés à leurs extrémités sur chacun des deux côtés latéraux de l'élément médian (4a) de part et d'autre de l'élément médian (4a), entre une position rabattue à l'horizontale sur le châssis (5) du véhicule correspondant à une configuration non-étendue de la benne (3), dans laquelle la partie pleine de l'élément d'extrémité (4b) du plancher est intercalée entre la cabine (2) et l'élément médian (4a) et une position rabattue vers l'arrière, dans laquelle les bras (8, 8') sont en appui sur le châssis (5) de part et d'autre de l'élément médian (4a) et la partie pleine de l'élément d'extrémité (4b), disposée dans le prolongement longitudinal de l'élément médian (4a), vers l'arrière,
- la paroi d'extrémité arrière ouvrante est constituée par deux portes (7, 7') montées pivotantes chacune autour d'un premier axe vertical sur le châssis (5), immédiatement à l'arrière de l'élément médian (4a) de plancher et comportant chacune un premier et un second panneaux (7a, 7'a, 7b, 7'b), le premier panneau (7a, 7'a) étant articulé sur le châssis (5) autour du premier axe vertical et le second panneau (7b, 7'b) étant articulé sur le premier panneau (7a, 7'a) autour d'un second axe vertical suivant un second bord du premier panneau (7a, 7'a) parallèle et opposé à un premier bord suivant lequel se trouve le premier axe, de manière que les portes (7, 7') puissent être placées dans une première position pour constituer la paroi transversale d'extrémité arrière de la benne dans sa configuration non étendue, les premiers et seconds panneaux (7a, 7'a, 7b, 7'b) des portes (7, 7') étant rabattus l'un contre l'autre et les portes (7, 7') étant placées dans une disposition transversale à l'arrière de l'élément médian (4a) du plancher (4) et dans une seconde position correspondant à une position d'extension de la benne (3), les premiers panneaux (7a, 7'a) étant disposés longitudinalement dans l'alignement de parois latérales fixes (46') de la benne (3) et les seconds panneaux (7b, 7'b) des portes (7, 7') étant placés transversalement pour fermer la benne (3) à l'arrière de l'élément d'extrémité (46) du plancher (4) rabattu vers l'arrière, et que
- le véhicule comporte de plus un élément complémentaire de plancher (4c) ayant une largeur sensiblement égale à la dimension transversale de la benne (3) et une dimension longitudinale sensiblement égale à la distance entre l'arrière de la cabine (2) et le bord antérieur de l'élément médian (4a) de plancher, monté pivotant suivant son bord transversal avant sur le châssis (5) du véhicule, immédiatement à l'arrière de la cabine (2), entre une position relevée contre l'arrière de la cabine (2) dans la première position non étendue de la benne (3) et une position rabattue sur le châssis (5) entre la cabine (2) et l'élément médian (4a) du plancher (4), dans la seconde position étendue de la benne (3).

2. Véhicule automobile suivant la revendication 1 **caractérisé par le fait que** l'élément d'extrémité (4b) et l'élément complémentaire (4c) du plancher de la benne (3) du véhicule automobile comportent des moyens (11, 11a, 11b, 15) de verrouillage sur des parties fixes du véhicule automobile, dans au moins deux positions correspondant respectivement à la configuration normale non-étendue de la benne (3) et à la position étendue de la benne (3) du véhicule automobile.

3. Véhicule automobile suivant la revendication 2 **caractérisé par le fait que** les moyens de verrouillage de l'élément d'extrémité (4b) et de l'élément complémentaire (4c) du plancher (4) du véhicule automobile sont constitués chacun par un verrou (11) disposé suivant un bord de l'élément de plancher de direction transversale et constitué de deux loquets (11a, 11b) engagés, chacun dans un palier (12a, 12b) ménagés suivant le bord de l'élément de plancher (4b, 4c) et accessibles suivant une partie médiane du bord de l'élément de plancher (4b, 4c) d'un côté et de l'autre de l'élément de plancher en forme de panneau, les loquets (11a, 11b) coopérant avec des ouvertures (13) des parois longitudinales fixes (6, 6') de la benne (3) du véhicule automobile pour un verrouillage dans chacune de leurs positions correspondant à la configuration normale non-étendue et à la configuration étendue de la benne (3) du véhicule automobile.

4. Véhicule automobile suivant la revendication 2, **caractérisée par le fait que** les moyens de verrouillage (15) des portes (7, 7') de la benne (3) sont constitués chacun par un doigt coulissant dans une direction verticale du premier et du second panneaux( 7a, 7b, 7'a,7'b) des portes (7, 7') et destiné à coopérer avec des ouvertures (16) dans la partie arrière du châssis (5) du véhicule automobile, à l'arrière de l'élément médian (4a) du plancher et dans des parties d'extrémité latérales de l'élément d'extrémité (4b) du plancher (4) de la benne (3).

5. Véhicule automobile suivant l'une quelconque des revendications 1 à 4 **caractérisée par le fait qu'**il comporte de plus un coffre (17) solidaire de bras (17a, 17'a) de direction longitudinale montée coulissant dans la direction longitudinale du châssis du véhicule automobile et de manière que le coffre (17) soit mobile entre une position rétractée en dessous de la partie arrière du châssis (5) du véhicule automobile et une position extraite à une certaine distance vers l'arrière, de la partie arrière du châssis du véhicule automobile de telle sorte que l'élément d'extrémité (4b) du plancher (4) recouvre une ouverture supérieure d'accès au coffre (17), dans sa position rabattue vers l'arrière.

6. Véhicule automobile suivant l'une quelconque des revendications de 1 à 5 **caractérisée par le fait qu'**une paroi arrière (2a) de la cabine du véhicule automobile constituant une paroi avant de la benne (3) comporte une ouverture (20), adjacente au poste de conduite du véhicule automobile munie d'une trappe de fermeture (20a) montée pivotante par sa partie inférieure autour d'un axe horizontal transversal, à la partie inférieure de la paroi (2a) de la cabine (2) du véhicule automobile de manière à se déplacer entre une position de fermeture dans le plan de la paroi arrière (2a) de la cabine (2) du véhicule automobile et une position ouverte rabattue à l'intérieur de la cabine (2) du véhicule automobile, de manière à permettre le chargement d'objets longs, dans la benne (3) et suivant la longueur du véhicule automobile, à la fois à l'intérieur de la benne (3) et à l'intérieur de la cabine (2) du véhicule automobile (1).

## Patentansprüche

1. Kraftfahrzeug mit einem nach oben offenen Wagenkasten (3) mit parallelepipedischer Gesamtform, der hinter einer Kabine (2) angeordnet ist, die den Platz des Fahrzeugführers enthalt, und der eine Bodenplatte (4), zwei Seitenwände in Längsrichtung des Fahrzeugs und eine hintere Endwand zum Öffnen enthält, die der Kabine (2) gegenüberliegend in Querrichtung angeordnet ist, **dadurch gekennzeichnet, dass**:
- die Bodenplatte ein mittleres Bodenplattenelement (4a) umfasst, das an einem horizontalen Unterbau (5) des Fahrzeugs dauerhaft und in Queranordnung befestigt ist, mit einer vorderen Kante in Querrichtung in einem bestimmten Abstand zu der Kabine (2) in Längsrichtung, und ein Endelement (4b), das einen durchgehenden Teil mit der Breite der Bodenplatte des Wagenkastens und mit einer Abmessung in Längsrichtung, die im wesentlichen gleich dem Abstand zwischen der Kabine (2) und der vorderen Kante des mittleren Elements (4a) ist, sowie zwei zueinander parallele Arme (8, 8') in Verlängerung der zwei seitlichen Kanten des durchgehenden Teils in Längsrichtung umfasst, die an ihren Enden mit jeder der zwei Seiten des mittleren Elementes (4a) beiderseits des mittleren Elements (4a) schwenkbar zwischen einer in die Horizontale umgeklappten Position auf dem Unterbau (5) des Fahrzeugs, die einer nicht verlängerten Anordnung des Wagenkastens (3) entspricht, in der der durchgehende Teil des Endelements (4b) der Bodenplatte zwischen der Kabine und dem mittleren Element (4a) liegt, und einer nach hinten geklappten Position befestigt ist, in der die Arme (8, 8') auf dem,Unterbau (5) beidseitig des mittleren Elements (4a) und des durchgehenden Teils des Endelements (4b), der in Verlängerung des mittleren Elements (4a) in Längsrichtung angeordnet ist, nach hinten aufliegen,
- die hintere Endwand zum Öffnen aus zwei Türen (7, 7') besteht, die jede um eine erste vertikale Achse auf dem Unterbau (5) schwenkbar unmittelbar hinter dem mittleren Bodenplattenelement (4a) angebracht sind und die jede ein erstes und ein zweites Türelement (7a, 7'a, 7b, 7'b) enthalten, wobei das erste Türelement (7a, 7'a) um eine erste vertikale Achse schwenkbar auf dem Unterbau (5) montiert ist und das zweite Türelement (7b, 7'b) an dem ersten Türelement (7a, 7'a) um eine zweite vertikale Achse entlang dem zweiten Rand des ersten Turelementes (7a, 7'a) schwenkbar montiert ist, der zu einem ersten Rand parallel ist und ihm gegenüberliegt, entlang dem sich die erste Achse befindet, derart, dass die Türen (7, 7') in eine erste Position, um die hintere querverlaufende Endwand des Wagenkastens in der nicht verlängerten Anordnung zu bilden, wobei die ersten und zweiten Türelemente (7a, 7'a, 7b, 7'b) der Türen (7, 7') eines gegen das andere geklappt sind und die Türen (7, 7') hinter dem mittleren Element (4a) der Bodenplatte (4) in Queranordnung gebracht sind und in eine zweite Position gebracht werden können, die einer verlängerten Position des Wagenkastens (3) entspricht, wobei die ersten Türelemente (7a, 7'a) in Längsrichtung fluchtend mit den festen Seitenwänden (46') des Wagenkastens (3) angeordnet sind und die zweiten Türelemente (7b, 7'b) der Türen (7, 7') in Querlage gebracht sind, um den Wagenkasten (3) hinter dem Endelement (46) der Bodenplatte (4), die nach hinten geklappt ist, abzuschließen, und dass
- das Fahrzeug außerdem ein Bodenplattenergänzungselement (4c) enthalt, das eine Breite, die im Wesentlichen gleich der Querabmessung des Wagenkastens (3) ist, und eine Länge aufweist, die im Wesentlichen gleich dem Abstand zwischen der Rückseite der Kabine (2) und der vorderen Kante des mittleren Elements (4a) der Bodenplatte ist, das zwischen einer gegen die Rückseite der Kabine (2) aufgerichteten Position in der ersten, nicht verlängerten Stellung des Wagenkastens (3) und einer auf den Unterbau (5) zwischen der Kabine (2) und dem mittleren Element (4a) der Bodenplatte (4) umgeklappten Position in der zweiten, verlängerten Stellung des Wagenkastens (3) um seine vordere Querkante auf dem Unterbau (5) des Fahrzeugs unmittelbar an der Rückseite der Kabine (2) schwenkbar montiert ist.

2. Kraftfahrzeug nach Anspruch 1, **dadurch gekennzeichnet, dass** das Endelement (4b) und das Ergänzungselement (4c) der Bodenplatte des Wagenkastens (3) des Kraftfahrzeugs Verriegelungseinrichtungen (11, 11a, 11b, 15) an festen Teilen des Kraftfahrzeugs für wenigstens zwei Positionen umfassen, die jeweils der normalen, nicht verlängerten Anordnung des Wagenkastens (3) und der verlängerten Stellung des Wagenkastens (3) des Kraftfahrzeugs entsprechen.

3. Kraftfahrzeug nach Anspruch 2, **dadurch gekennzeichnet, dass** die Verriegelungseinrichtungen des Endelements (4b) und des Ergänzungselements (4c) der Bodenplatte (4) des Kraftfahrzeugs jede aus einem Riegel (11) bestehen, der entlang einer Kante Elements der Bodenplatte in Querrichtung angeordnet ist, und aus zwei Fallriegeln (11a, 11b) bestehen, die jeder in einem Widerlager (12a, 12b) eingefallen sind, die entlang der Kante des Bodenplattenelements (4b, 4c) angeordnet sind und entlang einem mittleren Teil des Rands des Bodenplattenelements der Bodenplatte (4b, 4c) von beiden Seiten des Elements der Bodenplatte in Form eines Bodenteils zugänglich sind, wobei die Fallriegel (11a, 11b) mit den Öffnungen (13) der festen Längsseitenwände (6, 6') des Wagenkastens (3) des Kraftfahrzeugs für eine Verriegelung in jeder seiner Stellungen zusammenwirken, die der normalen, nicht verlängerten Anordnung und der verlängerten Anordnung des Wagenkastens (3) des Kraftfahrzeugs entsprechen.

4. Kraftfahrzeug nach Anspruch 2, **dadurch gekennzeichnet, dass** die Verriegelungseinrichtungen (15) der Türen (7, 7') des Wagenkastens (3) jede aus einem Zapfen bestehen, der in vertikaler Richtung der ersten und zweiten Türelemente (7a, 7'a, 7b, 7'b) der Türen (7, 7') verschieblich ist und dazu bestimmt ist, mit den Öffnungen (16) im hinteren Teil des Unterbaus (5) des Kraftfahrzeugs, hinten im mittleren Element (4a) der Bodenplatte und in seitlichen Enden des Endelements (4b) der Bodenplatte (4) des Wagenkastens (3) zusammenzuwirken.

5. Kraftfahrzeug nach irgendeinem der Ansprüche 1 bis 4, **dadurch gekennzeichnet, dass** es außerdem einen Gepäckraum (17) in einem Stück mit Armen (17a, 17'a) in Längsrichtung enthält, die in Längsrichtung des Unterbaus des Kraftfahrzeugs verschieblich montiert sind, und derartig sind, dass der Gepäckraum (17) zwischen einer zurückgezogenen Position unter dem hinteren Teil des Unterbaus (5) des Kraftfahrzeugs und einer um eine gewisse Strecke von dem hinteren Teil des Unterbaus des Kraftfahrzeugs nach hinten ausgezogenen Position beweglich ist, derart, dass das Endelement (4b) der Bodenplatte (4) eine obere Zugangsöffnung zu dem Gepäckraum (17) in seiner nach hinten zurückgeklappten Position überdeckt.

6. Kraftfahrzeug nach irgendeinem der Ansprüchen 1 bis 5, **dadurch gekennzeichnet, dass** eine hintere Wand (2a) der Kabine des Kraftfahrzeugs, die eine vordere Wand des Wagenkastens (3) darstellt, eine Öffnung (20) enthält, die an den Platz des Fahrzeugführers des Kraftfahrzeugs angrenzt, die mit einer Verschlußklappe (20a) ausgerüstet ist, die mit ihrem unteren Teil um eine querliegende horizontale Achse schwenkbar am unteren Teil der Wand (2a) der Kabine (2) des Kraftfahrzeugs so befestige ist, dass sie sich zwischen einer geschlossenen Position in der Ebene der hinteren Wand (2a) der Kabine (2) des Kraftfahrzeugs und einer geöffneten, in das Innere der Kabine (2) des Kraftfahrzeugs zurückgeklappten Position bewegt, sodass das Laden langer Gegenstände in den Wagenkasten (3) und in Längsrichtung des Kraftfahrzeugs gleichzeitig in den Innenraum des Wagenkastens (3) und in den Innenraum der Kabine (2) des Kraftfahrzeugs (1) ermöglicht wird.

## Claims

1. Automobile vehicle having a bed (3) open at the top, of generally parallelepipedal shape and situated to the rear of a cab (2) containing the driver station of the vehicle, the bed having a floor (4), two lateral walls in the longitudinal direction of the vehicle and an openable transverse rear end wall at the end opposite the cab (2), **characterised in that**:
- the floor comprises a transversely disposed median floor member (4a) permanently fixed to a horizontal chassis (5) of the vehicle and having an anterior transverse edge at a certain longitudinal distance from the cab (2), an end member (4b) comprising a solid portion the same width as the floor of the bed and having a longitudinal dimension substantially equal to the distance between the cab (2) and the anterior edge of the median member (4a), and two parallel arms (8, 8') longitudinally aligned with two lateral edges of the solid portion and articulated at their ends to each of the two lateral sides of the median member (4a) on either side of the median member (4a), to pivot between a position folded horizontally onto the chassis (5) of the vehicle and corresponding to a non-extended configuration of the bed (3) in which the solid portion of the end floor member (4b) is located between the cab (2) and the median member (4a) and a position folded toward the rear in which the arms (8, 8') bear on the chassis (5) on either side of the median member (4a) and the solid portion of the end member (4b) longitudinally aligned with the median member (4a), to the rear thereof,
- the openable rear end wall comprises two gates (7, 7') each mounted on the chassis (5) to pivot about a first vertical axis immediately to the rear of the median floor member (4a) and each comprising first and second panels (7a, 7'a, 7b, 7'b), the first panel (7a, 7'a) being articulated to the chassis (5) about the first vertical axis and the second panel (7b, 7'b) being articulated to the first panel (7a, 7'a) about a second vertical axis at a second edge of the first panel (7a, 7'a) parallel to and opposite a first edge thereof extending along the first axis, so that the gate (7, 7') can be placed in a first position to constitute the transverse wall at the rear end of the bed in its non-extended configuration, with the first and second panels (7a, 7'a, 7b, 7'b) of the gates (7, 7') folded one against the other and the gates (7, 7') transversely disposed to the rear of the median member (4a) of the floor (4), and in a second position corresponding to an extended position of the bed (3), with the first panels (7a, 7'a) longitudinally aligned with fixed lateral walls (46') of the bed (3) and the second panels (7b, 7'b) of the gates (7, 7') transversely disposed to close the bed (3) to the rear of the rearwardly folded end member (46) of the floor (4), and **in that**
- the vehicle further comprises a complementary floor member (4c) having a width substantially equal to the transverse dimension of the bed (3) and a longitudinal dimension substantially equal to the distance between the rear of the cab (2) and the anterior edge of the median floor member (4a), mounted on the chassis (5) of the vehicle to pivot about its front transverse edge, immediately to the rear of the cab (2), between a position raised against the rear of the cab (2) in the non-extended first configuration of the bed (3) and a position folded onto the chassis (5) between the cab (2) and the median member (4a) of the floor (4) in the extended second configuration of the bed (3).

2. Automobile vehicle according to claim 1, **characterised in that** the end member (4b) and the complementary member (4c) of the floor of the bed (3) of the automobile vehicle comprise locking means (11, 11a, 11b, 15) for fixing them to portions of the automobile vehicle in at least two positions respectively corresponding to the normal non-extended configuration of the bed (3) of the automobile vehicle and the extended configuration of the bed (3).

3. Automobile vehicle according to claim 2, **characterised in that** the locking means of the end member (4b) and the complementary member (4c) of the floor (4) of the automobile vehicle each comprise a bolt (11) disposed along an edge of the transverse floor member and consisting of two latches (11a, 11b) each engaged in a bearing (12a, 12b) formed along the edge of the floor member (4b, 4c) and accessible in a median portion of the edge of the floor member (4b, 4c) on either side of the floor member, which is in the form of a panel, the latches (11a, 11b) cooperating with openings (13) in the fixed longitudinal walls (6, 6') of the bed (3) of the automobile vehicle to lock in each of their positions corresponding to the normal non-extended configuration and to the extended configuration of the bed (3) of the automobile vehicle.

4. Automobile vehicle according to claim 2, **characterised in that** the locking means (15) of the gates (7, 7') of the bed (3) each consist of a finger sliding in a vertical direction of the first and second panels (7a, 7'a, 7b, 7'b) of the gates (7, 7') and adapted to cooperate with openings (16) in the rear portion of the chassis (5) of the automobile vehicle, to the rear of the median floor member (4a) and in lateral end portions of the end member (4b) of the floor (4) of the bed (3).

5. Automobile vehicle according to any of claims 1 to 4, **characterised in that** it further comprises a storage box (17) fastened to longitudinal arms (17a, 17'a) mounted to slide in the longitudinal direction of the chassis of the automobile vehicle so that the storage box (17) is mobile between a position retracted under the rear portion of the chassis (5) of the automobile vehicle and a position extracted rearwardly a certain distance from the rear portion of the chassis of the automobile vehicle so that the end member (4b) of the floor (4) covers a top access opening to the storage box (17) when in its rearwardly folded position.

6. Automobile vehicle according to any of claims 1 to 5, **characterised in that** a rear wall (2a) of the cab of the automobile vehicle constituting a front wall of the bed (3) comprises an opening (20) adjacent the driver station of the automobile vehicle fitted with a closure hatch (20a) mounted to pivot at the bottom about a transverse horizontal axis on the lower portion of the wall (2a) of the cab (2) of the automobile vehicle so as to move between a closed position in the plane of the rear wall (2a) of the cab (2) of the automobile vehicle and an open position folded inside the cab (2) of the automobile vehicle to allow the loading of long objects into the bed (3) and along the length of the automobile vehicle, simultaneously inside the bed (3) and inside the cab (2) of the automobile vehicle (1).
